# FASCICULE DE BREVET EUROPEEN

(11) **EP 0 911 934 B1**
(45) Date de publication et mention de la délivrance du brevet: **01.03.2006**
(21) Numéro de dépôt: 98402584.1
(22) Date de dépôt: 19.10.1998
(51) Int. Cl.: H02G 13/00

(54) **Montage de parafoudre pour ligne électrique aérienne avec un indicateur de défaut de fonctionnement du parafoudre**
Blitzableitervorrichtung für elektrische Freileitung mit einem Fehlerindikator
Lightning conductor device for electrical overhead line with a malfunction indicator

(30) Priorité: 24.10.1997 FR 9713355
(43) Date de publication de la demande: 28.04.1999
(73) Titulaire: SEDIVER, SOCIETE EUROPEENNE D'ISOLATEURS EN VERRE ET COMPOSITE, F-92017 Nanterre Cédex (FR)
(72) Inventeur: Joulie, René, 03700 Bellerive sur Allier (FR); Brocard, Emmanuel, 78260 Acheres (FR); Tartier, Serge, 03300 Cusset (FR)
(74) Mandataire: Prugneau, Philippe

(56) Documents cités:
- EP-A- 0 431 528
- PATENT ABSTRACTS OF JAPAN vol. 97, no. 1, 31 janvier 1997 & JP 08 251784 A (NGK INSULATORS LTD), 27 septembre 1996
- PATENT ABSTRACTS OF JAPAN vol. 13, no. 88 (E-721), 28 février 1989 & JP 63 266791 A (HITACHI LTD), 2 novembre 1988
- PATENT ABSTRACTS OF JAPAN vol. 95, no. 10, 30 novembre 1995 & JP 07 176235 A (TOSHIBA CORP), 14 juillet 1995

## Description

L'invention concerne un montage de parafoudre pour une ligne aérienne de transmission d'énergie électrique sous haute tension. Elle concerne plus particulièrement les montages où chaque fil d'une ligne est suspendu en haut d'un pylône par l'intermédiaire d'un isolateur électrique ou d'une chaîne d'éléments isolateurs avec un éclateur à air ayant une corne électriquement reliée au fil de ligne et une seconde corne reliée directement à la terre ou à un parafoudre relié lui-même à la terre.

Une ligne aérienne de transmission d'énergie électrique en service est en permanence soumise à une haute tension alternative polyphasée à laquelle sont susceptibles de s'ajouter des surtensions transitoires qui apparaissent en particulier lors des manoeuvres d'ouverture ou de fermeture de la ligne ainsi qu'exceptionnellement et avec une magnitude bien supérieure en cas d'impact de foudre. Il est donc prévu d'associer des éclateurs à une ligne aérienne pour limiter les effets de ces surtensions et depuis plus récemment des parafoudres pour compléter la protection.

Ces éclateurs et ces parafoudres sont habituellement associés aux montages de support de fil de ligne que comportent les pylônes de soutien d'une ligne aérienne de transmission d'énergie électrique.

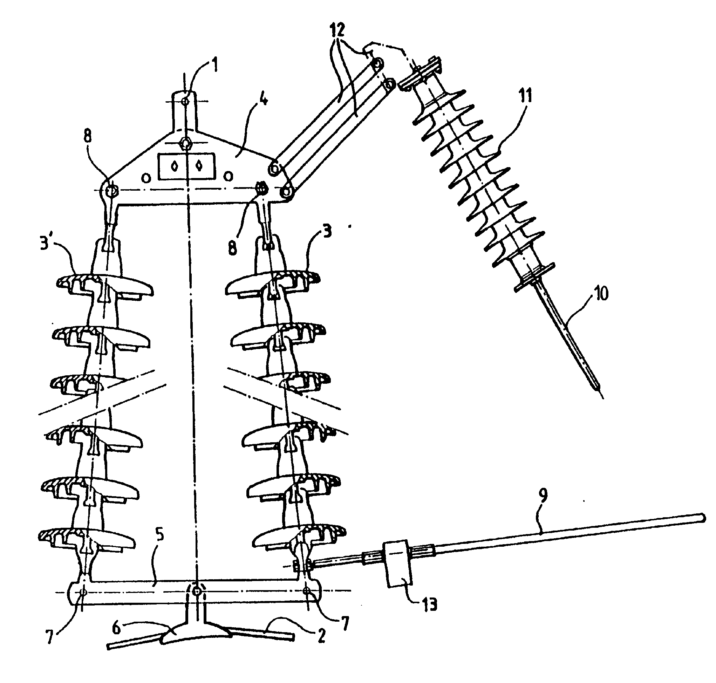

Le document EP-A-0431528 comporte une figure 1 où est illustré un montage classique de support de fil de ligne dans lequel un élément isolateur, constitué par une chaîne d'isolateurs, est suspendu par une première extrémité sous un bras d'un pylône, par l'intermédiaire d'une structure mécanique de suspension, cette première extrémité étant reliée à la terre. Le fil est accroché à une structure mécanique porteuse qui est fixée sous une seconde extrémité de l'élément isolateur. Le montage est complété par une branche de circuit comportant un éclateur à air monté en série avec un parafoudre entre un fil de ligne et la terre.

L'éclateur comporte deux cornes, l'une est fixée à la première extrémité de l'élément isolateur qui est reliée au fil de ligne, l'autre est fixée sur le parafoudre par lequel elle est reliée à la terre et à la seconde extrémité de l'élément isolateur.

La distance entre les extrémités libres des cornes de cet éclateur est choisie de manière qu'il y ait systématiquement un amorçage d'arc entre ces extrémités et donc via la parafoudre, lors de l'apparition d'une surtension dangereuse, notamment en cas de foudre.

Le courant apparaissant en cas d'établissement d'un arc électrique entre les cornes de l'éclateur est susceptible d'être très important, il est par exemple de l'ordre de 5000 à 200000 ampères pendant un court intervalle de temps en cas d'impact de foudre. Il y a donc un risque important de destruction du parafoudre monté en série avec l'éclateur, si l'énergie de la foudre est supérieure à la capacité énergétique et donc, dans ce cas, un risque de maintien de l'arc après disparition de la surtension, jusqu'à l'entrée en action d'un disjoncteur de protection de la ligne.

Il est donc connu d'associer un appareil indicateur d'un défaut de fonctionnement ou d'avaries pour signaler la défaillance d'un parafoudre, de tels appareils étant notamment détaillés dans le document EP-A-0431528 déjà cité plus haut. Dans un montage classique présenté en figure 2 de ce document, l'indicateur de défaut de fonctionnement est prévu inséré entre la terre et le parafoudre auquel il est associé de manière à être parcouru par le courant qui traverse le parafoudre en cas de surtension, lorsque celle-ci se traduit par un arc entre les cornes de l'éclateur avec lequel le parafoudre est en série.

Ce parafoudre ne doit donc être relié à la terre que par l'indicateur de défaut de fonctionnement et son maintien en position dans le montage s'effectue par l'intermédiaire d'un bloc de support en matériau isolant fixé au niveau de l'extrémité de l'élément isolateur qui est reliée à la terre. Un tel agencement présente des inconvénients notables dans la mesure où il implique que le parafoudre soit isolé de la structure métallique du pylône qui est à la terre. Le support en matériau isolant sur lequel est monté le parafoudre introduit des risques mécaniques supplémentaires et peut éventuellement perdre ses caractéristiques mécaniques et électriques plus rapidement que prévu, si l'environnement où se retrouve ce support est sévère

Par ailleurs, l'indicateur de défaut de fonctionnement qui doit être visible pour un observateur usuellement au sol, est susceptible d'être caché par d'autres éléments du montage du fait de sa position au niveau du haut de l'élément isolateur et à proximité de l'extrémité haute de cet élément.

Le but de l'invention est de remédier aux différents inconvénients de l'art antérieur.

A cet effet, l'invention a pour objet un montage de parafoudre pour ligne aérienne de transmission d'énergie électrique, dans lequel un parafoudre est branché en série avec un éclateur à air entre la ligne de transmission d'énergie et une structure support en forme de bras d'un pylône raccordée à la terre et, incluant un dispositif indicateur d'un défaut de fonctionnement du parafoudre, caractérisé en ce que ledit dispositif indicateur d'un défaut de fonctionnement du parafoudre est monté en série avec le parafoudre sur une des cornes de l'éclateur à air.

Selon un mode de réalisation particulier de l'invention, l'éclateur à air comprend une première corne reliée électriquement à la ligne de transmission d'énergie et une seconde corne reliée électriquement à une extrémité du parafoudre, le dispositif indicateur de défaut de fonctionnement étant monté sur la première corne de l'éclateur à air, par exemple en série entre deux segments de la première corne. Le dispositif indicateur est de préférence placé au plus près de l'extrémité de la première corne reliée à la ligne de transmission d'énergie.

L'invention, ses caractéristiques et ses avantages sont précisés dans la description qui suit en liaison avec la figure unique définie ci-dessous.

Cette figure unique présente un schéma synoptique d'un exemple de montage à indicateur d'un défaut de fonctionnement de parafoudre pour pylône support de ligne électrique aérienne selon l'invention.

Ce montage à indicateur de défaut de fonctionnement pour pylône support de ligne aérienne de transmission d'énergie électrique est destiné à être suspendu à une extrémité 1 d'un bras de support d'un pylône non représenté par l'intermédiaire d'un élément isolateur de support.

Cet élément isolateur peut par exemple être constitué par un module isolateur unique ou par une ou plusieurs chaînes d'isolateurs. Dans l'exemple illustré d'un montage de type connu, un pylône supporte un fil de ligne 2 par l'intermédiaire d'un élément isolateur composé de deux chaînes identiques d'isolateurs en série 3 et 3' qui sont disposées dans une structure mécanique en forme de trapèze isocèle dont un des côtés parallèles est constitué par une structure de suspension 4 venant s'accrocher sous l'extrémité 1 et dont l'autre côté parallèle est constitué par une structure porteuse 5 auquel le fil 2 est centralement accroché par l'intermédiaire d'un étrier 6.

Le fil 2, la structure porteuse 5 et l'étrier 6 sont électriquement isolés de la structure de suspension 4 et du pylône comportant l'extrémité 1 par les chaînes d'isolateurs 3 et 3'. Celles-ci ont une première extrémité 7 portée au même potentiel que le fil 2, lorsque la ligne comportant ce fil est en service, et une seconde extrémité 8 reliée à la terre de même que le pylône.

Dans l'agencement montré à la figure 1, un éclateur à air comportant une première corne 9 et une seconde corne 10 est monté en série avec un parafoudre 11. La branche de circuit ainsi constituée est positionnée entre la première extrémité de la chaîne d'isolateurs 2 à laquelle la première corne 9 est électriquement reliée et la seconde extrémité 8 de cette chaîne à laquelle la seconde corne 10 est reliée, ici via le parafoudre 11 et une structure mécanique 12 électriquement conductrice de support de parafoudre. La structure de support en forme de bras 12 positionne le parafoudre 11 sur la structure de suspension 4 à laquelle il relie électriquement une extrémité de ce parafoudre qui est à l'opposé de celle où est montée la corne 10.

Selon une variante de réalisation, non représentée, et comme déjà indiqué plus haut, un fil de ligne peut éventuellement être supporté par un élément isolateur ne comportant qu'une seule chaîne d'isolateurs, voire un seul isolateur.

Quel que soit la réalisation envisagée, selon l'invention, un indicateur d'un défaut de fonctionnement du parafoudre 13 est placé sur une corne de l'éclateur monté en série avec le parafoudre 11 à des fins de surveillance de ce dernier. Cet indicateur de défaut de fonctionnement 13 est actionné par le courant qui transite par le parafoudre vers la terre en cas d'arc électrique établi entre les cornes 9 et 10.

Dans la réalisation présentée, l'indicateur 13 est placé sur la première corne 9 de l'éclateur monté en série avec le parafoudre 11 auquel il est affecté, ce qui lui permet d'être protégé contre les arcs électriques s'il advient que le parafoudre soit cassé.

Dans une première variante de cette réalisation; l'indicateur de défaut de fonctionnement 13 est placé en série entre un premier segment de la première corne 9, qui est électriquement relié au fil 2 et à la première extrémité 7 de l'élément isolateur à proximité de laquelle ce premier segment est mécaniquement fixé, et un second segment qui termine cette première corne.

L'indicateur de défaut de fonctionnement 13 comporte par exemple un corps de part et d'autre duquel deux embouts tubulaires conducteurs sont alignés en vue de coopérer électriquement et mécaniquement chacun avec un des segments de type tige de la première corne 9 d'éclateur sur laquelle il est monté. La liaison électromécanique entre un embout d'indicateur de défaut de fonctionnement 13 et un segment de première corne 9 est par exemple réalisée à l'aide d'un tube conducteur qui est enfiché sur l'embout et sur le segment ainsi positionnés bout à bout et qui est ensuite rétreint sur chacun d'entre eux. Il est bien entendu aussi possible de réaliser un tel montage en variante sur la seconde corne de l'éclateur en série avec le parafoudre surveillé.

Dans une autre variante de réalisation, l'indicateur de défaut de fonctionnement 13 est monté sur la corne elle-même où il se fixe, celle-ci pouvant alors être réalisée d'une seule pièce. Le corps de l'indicateur de défaut de fonctionnement 13 est alors soit muni d'un orifice traversant qui permet à la corne de le traverser, comme le sont les indicateurs de défaut de fonctionnement de type torique, soit réalisé en deux parties dissociables aptes à venir entourer cette corne.

Dans une forme préférée de réalisation, l'indicateur de défaut de fonctionnement 13 associé à un parafoudre est positionné à distance de l'extrémité libre et d'éclatement qui termine la corne où il est placé, et de préférence au plus prêt de l'autre extrémité de la corne.

Les indicateurs de défaut de fonctionnement comportés par un montage selon l'invention sont susceptibles d'être d'un type connu et de permettre au moins une signalisation minimale de défaillance des parafoudres auxquels ils sont individuellement associés. La figure 6 du document EP-A-0431528 évoqué précédemment illustre une forme de réalisation classique d'un indicateur de défaut de fonctionnement relativement simple.

Ces indicateurs peuvent aussi être d'un type qui autorise une signalisation plus complète en autorisant par exemple, une signalisation du nombre de coups de foudre subis, comme connu de l'homme de métier.

## Revendications

1. Un montage de parafoudre pour ligne aérienne de transmission d'énergie électrique, dans lequel un parafoudre (11) est branché en série avec un éclateur à air (9,10) entre la ligne de transmission d'énergie (2) et une structure support en forme de bras (12) d'un pylône raccordée à la terre et, incluant un dispositif (13) indicateur d'un défaut de fonctionnement du parafoudre, **caractérisé en ce que** ledit dispositif indicateur du défaut de fonctionnement du parafoudre est monté en série avec le parafoudre sur une des cornes de l'éclateur à air.

2. Le montage selon la revendication 1, dans lequel l'éclateur à air comprend une première corne (9) reliée électriquement à la ligne de transmission d'énergie et une seconde corne (10) reliée électriquement à une extrémité du parafoudre, le dispositif (13) indicateur de défaut de fonctionnement étant monté sur la première corne (9) de l'éclateur à air.

3. Le montage selon la revendication 2, dans lequel le dispositif (13) indicateur de défaut de fonctionnement est placé en série entre deux segments de la première corne (9) de l'éclateur à air.

4. Le montage selon l'une des revendications 2 ou 3, dans lequel le dispositif (13) indicateur de défaut de fonctionnement est placé au plus près de l'extrémité de la première corne (9) reliée à la ligne de transmission d'énergie.

## Claims

1. A lightning arrester assembly for an overhead line for transporting electricity, in which a lightning arrester (11) is connected in series with a horned spark-gap (9, 10) between the electricity transport line (2) and a support structure in the form of a pylon arm (12) connected to ground, and including a device (13) for flagging a malfunction of the lightning arrester, the assembly being **characterized in that** said device for flagging a malfunction of the lightning arrester is connected in series with the lightning arrester on one of the horns of the spark-gap.

2. The assembly according to claim 1, in which the spark-gap has a first horn (9) electrically connected to the electricity transport line and a second horn (10) electrically connected to one end of the lightning arrester, the device (13) for flagging a malfunction being connected to the first horn (9) of the spark-gap.

3. The assembly according to claim 2, in which the device (13) for flagging a malfunction is placed in series between two segments of the first horn (9) of the spark-gap.

4. The assembly according to claim 2 or 3, in which the device (13) for flagging a malfunction is placed as close as possible to the end of the first horn (9) connected to the electricity transport line.

## Patentansprüche

1. Blitzableitervorrichtung für eine Freileitung für die Übertragung elektrischer Energie, in welcher ein Blitzableiter (11) mit einer Luft-Funkenstrecke (9, 10) zwischen der Energieübertragungsleitung (2) und einer aus einem geerdeten Mastausleger (12) gebildeten Tragstruktur in Serie geschaltet ist, umfassend einen Fehleranzeiger (13) für die Funktion des Blitzableiters, **dadurch gekennzeichnet, dass** der Fehleranzeiger für die Funktion des Blitzableiters in Serie mit dem Blitzableiter über eines der Hörner der Luft-Funkenstrecke verbunden ist.

2. Vorrichtung nach Anspruch 1, in welcher die Luft-Funkenstrecke ein erstes Horn (9), welches mit der Energieübertragungsleitung elektrisch verbunden ist, und ein zweites Horn (10), welches mit einem Ende des Blitzableiters elektrisch verbunden ist, umfasst, wobei der Fehleranzeiger (13) für die Funktion an dem ersten Horn (9) der Luft-Funkenstrecke angebracht ist.

3. Vorrichtung nach Anspruch 2, in welcher der Fehleranzeiger (13) für die Funktion in Serie zwischen zwei Segmenten des ersten Horns (9) der Luft-Funkenstrecke geschaltet ist.

4. Vorrichtung nach Anspruch 2 oder 3, in welcher der Fehleranzeiger (13) für die Funktion so nahe wie möglich mit dem Ende des ersten Horns (9) verbunden ist, welches mit der Energieübertragungsleitung verbunden ist.
